# EUROPEAN PATENT APPLICATION

(11) **EP 4 005 443 A1**
(43) Date of publication of application: **01.06.2022**
(21) Application number: 20846162.4
(22) Date of filing: 28.07.2020
(51) Int. Cl.: A47J 43/046

(54) **MULTIFUNCTIONAL COOKER**

(30) Priority: 29.07.2019 CN 201921201592 U
(71) Applicant: Zhejiang Shaoxing Supor Domestic Electrical Appliance Co., Ltd., Shaoxing, Zhejiang 312017 (CN)
(72) Inventor: YANG, Baobin, Shaoxing, Zhejiang 312017 (CN)
(74) Representative: LLR
(86) International application number: PCT/CN2020/105270
(87) International publication number: WO 2021/018152

(57) **Abstract**

A multifunctional cooker (100) comprises a base (1) and a pot (2) assembled to the base (1), a driving assembly (3) being provided in the base (1), the pot (2) comprising a bottom (20) and a pot body (21) assembled to the bottom (20), a power assembly (4) adapted to the driving assembly (3) being provided in the bottom (20), a stirring assembly (6) that rotates while being driven by the power assembly (4) being detachably provided in the pot body (21). With the power assembly (4) driven by the driving assembly (3) in the base (1) and the stirring assembly (6) driven by the power assembly (4), the power of the driving assembly (3) can be reduced, thus achieving a low-speed stirring function of the cooker (100).

## Description

The present invention relates to the field of small household electrical appliances, and in particular, relates to a multifunctional cooker.

Currently, there are a variety of small kitchen appliances having their own functions. Some functions require heating while some do not, some (for example, crushing) require high speed rotation of an electric motor while some require a low power output by the electric motor, i.e., low speed rotation. Thus, multiple requirements are imposed on food processors.

To a user, it would be appreciated to break through the limitations between various functions of a food processor so as to flexibly combine different functions, which can not only reduce expenses but also facilitate its storage.

The present invention provides a multifunctional cooker.

According to an aspect of the present invention, a multifunctional cooker is provided, comprising a base and a pot assembled to the base, a driving assembly being provided in the base, the pot comprising a bottom and a pot body assembled to the bottom, a power assembly adapted to the driving assembly being provided in the bottom, a stirring assembly being detachably provided in the pot body and able to rotate under the drive of the power assembly. With the power assembly driven by the driving assembly in the base and the stirring assembly driven by the power assembly, the power of the driving assembly can be reduced, thereby achieving a low-speed stirring function of the cooker.

Further, the driving assembly comprises a motor and a first reduction gear set rotatably connected with the motor, the first reduction gear set comprising a first gear assembled to a tail end of a motor shaft of the motor and a second gear drivingly connected with the first gear by means of a transmission belt. The output speed at the second gear is reduced due to the connection between the first reduction gear set and the motor.

Further, the base comprises a base body and a bottom plate assembled to the base body, a first accommodating chamber that accommodates the second gear and a second accommodating chamber that accommodates the bottom being formed in the base body, an output shaft of the second gear being provided with a first coupler that extends into the second accommodating chamber, the power assembly being provided with a second coupler adapted to the first coupler. By providing the first coupler and the second coupler, a relatively good coaxiality after the first reduction gear set is connected with the power assembly is ensured, thus ensuring the kinetic energy conversion efficiency.

Further, the power assembly comprises a transmission shaft assembly and a magnetic driving assembly rotatably connected with the transmission shaft assembly, the transmission shaft assembly comprising a transmission shaft and a third gear provided on the transmission shaft and connected with the magnetic driving assembly, the second coupler being provided on the transmission shaft. By dividing the power assembly into the transmission shaft assembly and the magnetic driving assembly to perform a two-stage speed reduction on the rotating speed of the motor, the low-speed rotation of the stirring assembly is ensured.

Further, the magnetic driving assembly comprises a first support and a fourth gear and a magnetic assembly provided on the first support, the fourth gear being provided below the first support and engaged with the third gear, the magnetic assembly being provided above the first support and driving the stirring assembly to rotate. Since the fourth gear and the magnetic assembly are fixed by means of the first support, the stability of the multifunctional cooker in use is ensured. In addition, with the two-stage speed reduction performed on the rotating speed of the motor by means of the engaging connection between the fourth gear and the third gear, the cooperation between the magnetic assembly and the stirring assembly is simple in structure and reliable in performance.

Further, the magnetic assembly comprises a first magnet and an assembling box for assembling the first magnet, the first support being provided with a first rotary shaft that passes through the assembling box and assembles and fixes the magnetic assembly to the first support by means of a nut. Since the magnetic assembly is fixed to the first support by means of the assembling box, damage to the first magnet is effectively avoided and normal functioning of the magnetic assembly is ensured.

Further, the stirring assembly comprises a second rotary shaft and a rotating member detachably assembled to the second rotary shaft, the rotating member comprising a body part and a stirring blade extending from the body part, a second magnet adapted to the first magnet being provided inside the body part. Thanks to the second rotary shaft, it is not necessary to provide an assembling hole on the pot body, so that the cooker can perform functions other than stirring, such as frying, stir frying, steaming, and boiling. In addition, the second magnet adapted to the first magnet simplifies the structure of the stirring assembly and ensures the stirring efficiency.

Further, the bottom is provided with a third accommodating chamber, at the center of which is provided a receiving part, the transmission shaft being at least partially received inside the receiving part and coaxially arranged with an axis of the second gear. Since the transmission shaft and the second gear are coaxially arranged, the transmission of the kinetic energy of the driving assembly is maximized, thereby avoiding structural loss.

Further, a plurality of receiving grooves are provided on a side wall of the second accommodating chamber, the bottom being provided with protruding ribs at locations corresponding to the receiving grooves, the protruding ribs being placed in the receiving grooves once the pot is assembled to the base so as to limit the circumferential rotation of the pot. The cooperation between the protruding ribs and the receiving grooves allows to ensure the stability after the two are assembled, preventing circumferential displacement of the pot that may occur during use.

Further, the pot body comprises a side wall and a bottom wall, the bottom wall being provided with a heating assembly and a temperature control assembly, a heat isolating plate being provided between the pot body and the bottom. The heating assembly enables the multifunctional cooker to achieve functions of frying, deep frying, steaming and boiling, and the temperature control assembly prevents problems such as overheated food sticking to the pot during use. The heat insulating plate can reduce the downward radiation of the heating assembly which may affect the normal use of the magnetic driving assembly.

It can be seen from the technical solutions above that the invention, by providing the first reduction gear set in the base and the power assembly rotatably connected with the first reduction gear set in the bottom, achieves a two-stage speed reduction of the speed of the motor in the base, so that the stirring assembly of the cooker can achieve a high torsion at a low speed, making stirring easier and prolonging the service life of the cooker.

It should be understood that the general description above and the detailed description below are merely illustrative and made by way of example and do not limit the scope of the present invention.

In order to describe more clearly the technical solutions in the embodiments of the present invention, the accompanying drawings to be used in describing the embodiments below are briefly described. Obviously, the accompanying drawings described below merely illustrate some embodiments of the present invention. For an ordinary person skilled in the art, other drawings can be obtained based on those accompanying drawings without creative labour.
Figure 1 is a schematic partial sectional view of an assembled multifunctional cooker of an embodiment of the present invention;
Figure 2 is a schematic sectional view of an assembled multifunctional cooker of an embodiment of the present invention;
Figure 3 is a schematic exploded view in perspective of a pot of an embodiment of the present invention;
Figure 4 is a schematic exploded view in perspective of a base of an embodiment of the present invention;
Figure 5 is a schematic view of a pot of an embodiment of the present invention, with a stirring assembly assembled;
Figure 6 is a schematic view of a pot of an embodiment of the present invention, without the stirring assembly;
Figure 7 is a schematic exploded view in perspective of a stirring assembly of an embodiment of the present invention;
Figure 8 is a schematic exploded view in perspective of a magnetic driving assembly of an embodiment of the present invention;
Figure 9 is a schematic exploded view in perspective of a power assembly of an embodiment of the present invention.

### References:

**Multifunctional cooker 100**

| | | | | | |
|---|---|---|---|---|---|
| Base | 1 | Base body | 10 | Bottom plate | 11 |
| First accommodating chamber | 12 | | | Second accommodating chamber | 13 |
| Receiving groove | 130 | Power board | 14 | Receiving chamber | 15 |
| Pot | 2 | Bottom | 20 | Third accommodating chamber | 201 |
| Receiving part | 202 | Protruding rib | 203 | Pot body | 21 |
| Side wall | 210 | Bottom wall | 211 | Heating assembly | 212 |
| Temperature control assembly | 213 | | | Heat insulating plate | 214 |
| Driving assembly | 3 | Motor | 30 | First reduction gear set | 31 |
| First gear | 310 | Second gear | 311 | Output shaft | 3110 |
| First coupler | 32 | Second coupler | 33 | Motor hood | 34 |
| Controlpanel | 35 | | | | |
| Power assembly | 4 | Transmission shaft assembly | 40 | Transmission shaft | 401 |
| Third gear | 403 | | | | |
| Magnetic driving assembly | 5 | First support | 50 | First rotary shaft | 501 |
| Snap slot | 502 | Snap ring | 503 | Fourth gear | 51 |
| Magnetic assembly | 52 | First magnet | 520 | Assembling box | 521 |
| Nut | 53 | Oil bearing | 54 | | |
| Stirring assembly | 6 | Second rotary shaft | 60 | Rotating member | 61 |
| Body part | 610 | Stirring blade | 611 | Second magnet | 62 |

Exemplary embodiments will be described in detail here, and examples thereof are shown in the accompanying drawings. When the following description refers to the drawings, unless otherwise indicated, the same reference number in different drawings designates the same or similar elements. The modes of realization described in the following exemplary embodiments do not represent all the modes of realization consistent with the present invention. On the contrary, they are merely examples of devices and methods consistent with some aspects of the present invention as defined by the appended claims.

The terms used in the present invention are only for the purpose of describing specific embodiments and are not intended to limit the present invention. The singular forms such as "a", "said" and "the" used in the present invention and the appended claims are also intended to include plural forms, unless the context clearly indicates other meanings. It should also be understood that the term "and/or" as used herein refers to and includes any or all possible combinations of one or more associated listed items.

It should be understood that although the terms first, second, third, etc. may be used in the present application to describe various information, the information should not be limited to these terms. These terms are only used to distinguish the same type of information from each other. For example, without departing from the scope of the present invention, first information may also be referred to as second information, and similarly, second information may also be referred to as first information. Depending on the context, the word "if" as used herein can be interpreted as "when" or "during" or "in response to determining that".

The following describes in detail a multifunctional cooker of the present invention in reference to the accompanying drawings. In the absence of conflict, the following embodiments and features in the modes of realization can be combined with each other.

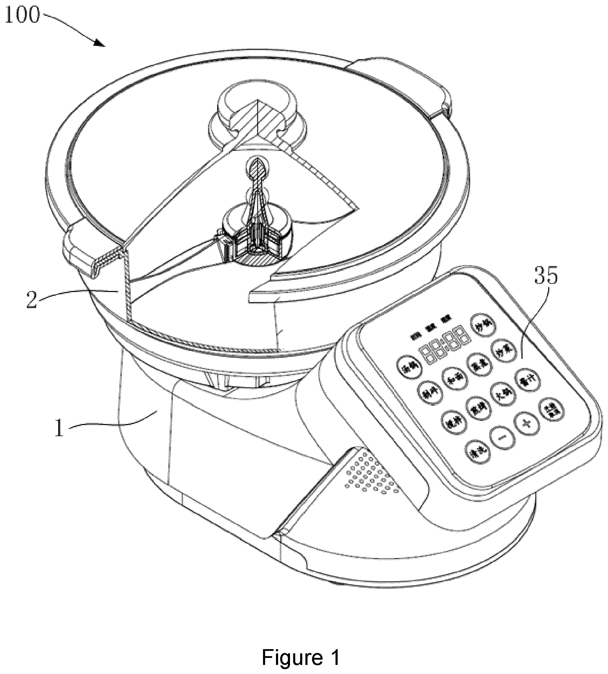

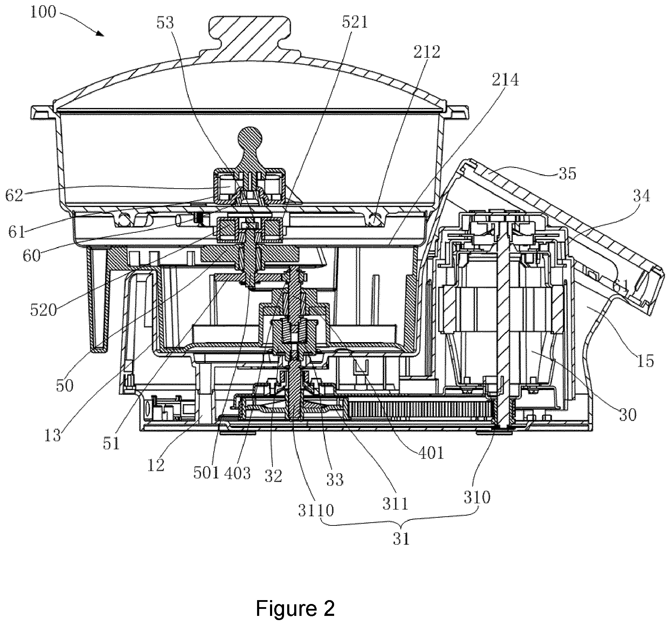

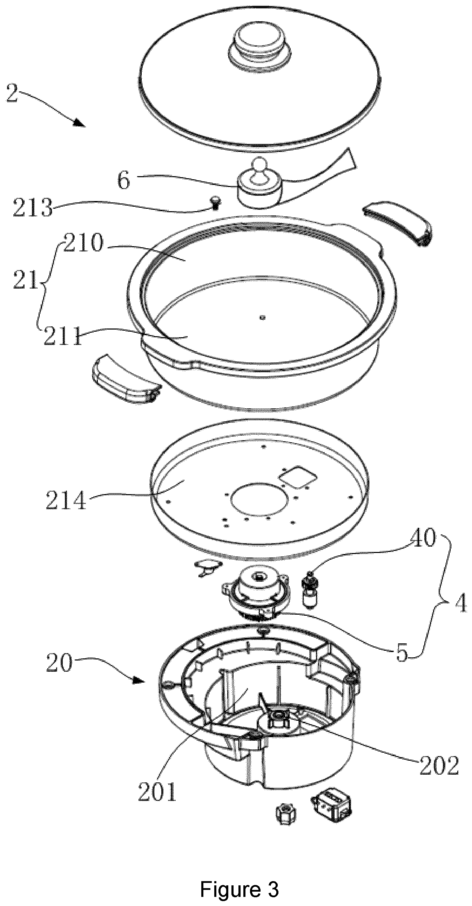

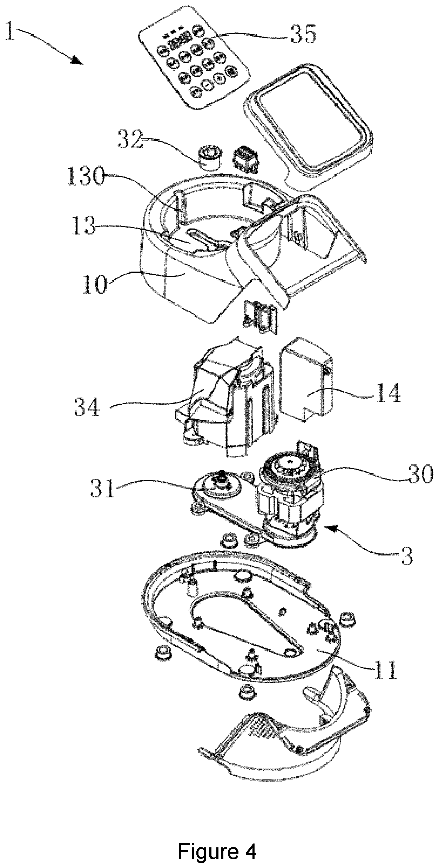

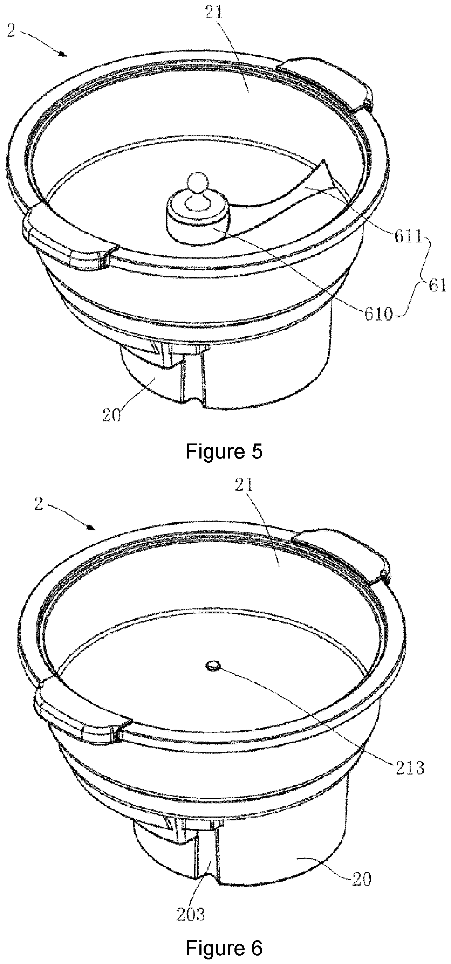

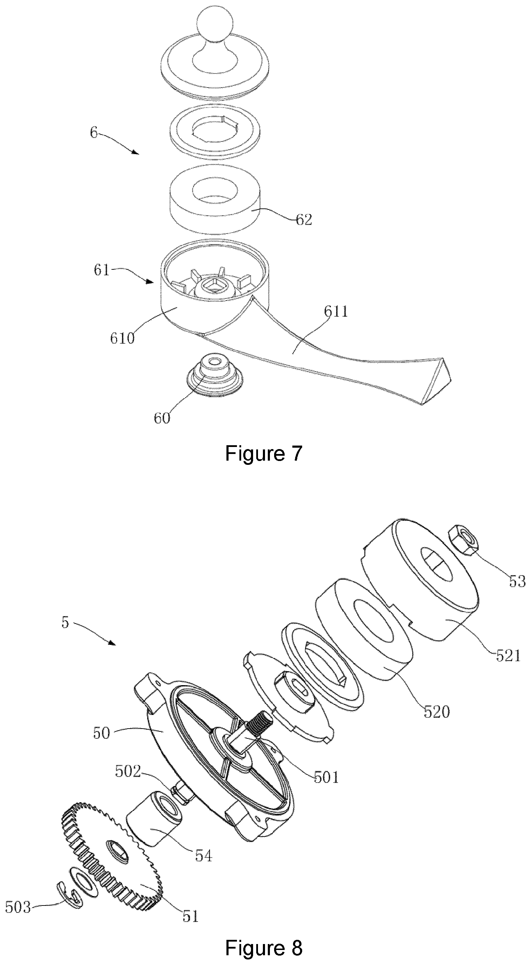

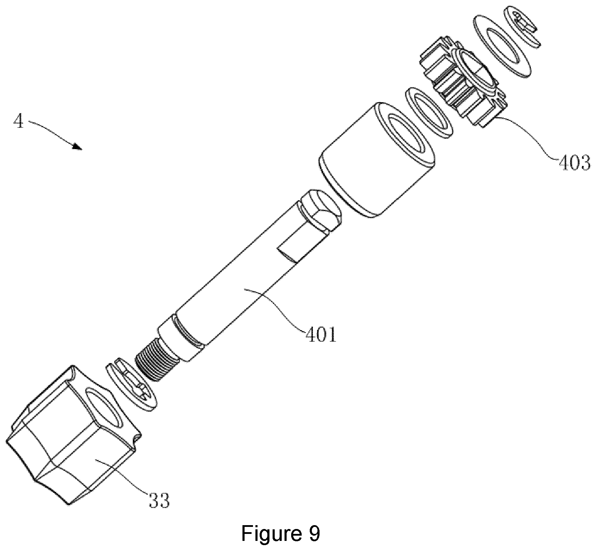

As illustrated in reference to Figures 1 to 9, a multifunctional cooker 100 of the present invention comprises a base 1 and a pot 2 assembled to the base 1. A driving assembly 3 is provided in the base 1. The pot 2 comprises a bottom 20 and a pot body 21 assembled to the bottom 20. A power assembly 4 adapted to the driving assembly 3 is provided in the bottom 20. A stirring assembly 6 that rotates under the drive of the power assembly 4 is detachably provided in the pot body 21. With the power assembly 4 driven by the driving assembly 3 in the base 1 and the stirring assembly 6 driven by the power assembly 4, the power of the driving assembly 3 can be reduced, thereby achieving a low-speed stirring function of the cooker.

The pot body 21 comprises a side wall 210 and a bottom wall 211. The bottom wall 211 is provided with a heating assembly 212 and a temperature control assembly 213. A heat isolating plate 214 is provided between the pot body 21 and the bottom 20. The heating assembly 212 enables the cooker to achieve functions of frying, deep frying, steaming, and boiling. The temperature control assembly 213 prevents problems such as overheated food sticking to the pot during use. The heat insulating plate 214 can reduce the downward radiation of the heating assembly 212 which may affect the normal use of a magnetic driving assembly 5.

In an embodiment, the driving assembly 3 comprises a motor 30 and a first reduction gear set 31 rotatably connected with the motor 30. The first reduction gear set 31 comprises a first gear 310 and a second gear 311. The first gear 310 is assembled to a tail end of a motor shaft of the motor, and the second gear 311 is drivingly connected with the first gear 310 by means of a transmission belt. The output speed at the second gear 311 is reduced due to the connection between the first reduction gear set 31 and the motor 30. The transmission ratio between the first gear 310 and the second gear 311 is greater than 2.

The base 1 comprises a base body 10 and a bottom plate 11 assembled to the base body 10. A first accommodating chamber 12 that accommodates the second gear 311 and a second accommodating chamber 13 that accommodates the bottom 20 are formed in the base body 10. An output shaft 3110 of the second gear is provided with a first coupler 32 that extends into the second accommodating chamber 13, and the power assembly 4 is provided with a second coupler 33 adapted to the first coupler 32. By providing the first coupler 32 and the second coupler 33, a relatively good coaxiality after the first reduction gear set 31 is connected with the power assembly 4 is ensured, thus ensuring the kinetic energy conversion efficiency. The base 1 further comprises a receiving chamber 15 that receives the motor 30. A motor hood 34 provided outside the motor 30 is located inside the receiving chamber 15, and the motor 30 is electrically connected with a power board 14 provided inside the receiving chamber 15. The base body 10 is also provided with a control panel 35 electrically connected with the power board 14 and located above the receiving chamber 15.

Further, a plurality of receiving grooves 130 are provided on a side wall of the second accommodating chamber 13, and the bottom 20 is provided with protruding ribs 203 at locations corresponding to the receiving grooves 130. The protruding ribs 203 are placed in the receiving grooves 130 once the pot 2 is assembled to the base 1 so as to limit the circumferential rotation of the pot 2. The cooperation between the protruding ribs 203 and the receiving grooves 130 allows to ensure the stability after the two are assembled, preventing circumferential displacement of the pot 2 that may occur during use.

In an embodiment, the power assembly 4 comprises a transmission shaft assembly 40 and a magnetic driving assembly 5 rotatably connected with the transmission shaft assembly 40. The transmission shaft assembly 40 comprises a transmission shaft 401 and a third gear 403 provided on the transmission shaft 401 and connected with the magnetic driving assembly 5. The second coupler 33 is provided on the transmission shaft 401. By dividing the power assembly 4 into the transmission shaft assembly 40 and the magnetic driving assembly 5 to perform a two-stage speed reduction on the rotating speed of the motor 30, the low-speed rotation of the stirring assembly 6 is ensured.

The bottom 20 is provided with a third accommodating chamber 201, at the center of which is provided a receiving part 202. The transmission shaft 401 is at least partially received inside the receiving part 202 and coaxially arranged with the axis of the second gear 311. Since the transmission shaft 401 and the second gear 311 are coaxially arranged, the transmission of the kinetic energy of the driving assembly 3 is maximized, thereby avoiding structural loss. The transmission shaft 401 is provided with an oil bearing received inside the receiving part 202 to fix the transmission shaft 401, preventing it from swinging circumferentially during rotation. Indeed, in another embodiment, the magnetic driving assembly 5 of the power assembly 4 can be directly rotatably connected with the second gear 311, i.e., the transmission shaft assembly can be omitted. If the driving assembly 3 is of the same structure as in the embodiment described above, then the driving assembly 3 and the power assembly 4 can only perform a one-stage speed reduction on the motor 30.

The magnetic driving assembly 5 comprises a first support 50 and a fourth gear 51 and a magnetic assembly 52 provided on the first support 50. The fourth gear 51 is provided below the first support 50 and engaged with the third gear 403. The magnetic assembly 52 is provided above the first support 50 and drives the stirring assembly 6 to rotate.

Since the fourth gear 51 and the magnetic assembly 52 are fixed by means of the first support 50, the stability of the multifunctional cooker 100 in use is ensured. In addition, with the two-stage speed reduction performed on the rotating speed of the motor 30 by means of the engaging connection between the fourth gear 51 and the third gear 403, the cooperation between the magnetic assembly 52 and the stirring assembly 6 is simple in structure and reliable in performance.

The magnetic assembly 52 comprises a first magnet 520 and an assembling box 521 for assembling the first magnet 520. The first support 50 is provided with a first rotary shaft 501 that passes through the assembling box 521 and fixes the magnetic assembly 52 to the first support 50 with a nut 53. Since the magnetic assembly 52 is fixed to the first support 50 by means of the assembling box 521, damage to the first magnet 520 is effectively avoided and normal functioning of the magnetic assembly 52 is ensured.

Specifically, a through hole is provided at the center of the fourth gear 51. The first rotary shaft 501 of the first support 50 passes through the through hole and is provided with a snap slot 502 at a terminal end. A gasket and a snap ring 503 are provided inside the snap slot 502 to assemble and fix the fourth gear 51 to the first support 50. An oil bearing 54 is provided at the location where the first support 50 is assembled with the first rotary shaft 501 to ensure that the first rotary shaft 501 can rotate smoothly. The assembly box 521 comprises a box bottom and a box cover, which, after being assembled, form an accommodating chamber that accommodates the first magnet 520. An assembling hole is provided respectively at the center of the box bottom, the first magnet 520, and the box cover. The assembling holes being coaxially provided, the first rotary shaft 501 can pass through the assembling holes and assemble and fix the magnetic assembly 52 with the first support 50 by means of the nut 53. Therefore, the rotation of the magnetic assembly 52 is synchronized with the first rotary shaft 501.

The stirring assembly 6 comprises a second rotary shaft 60 and a rotating member 61 detachably assembled to the second rotary shaft 60. The rotating member 61 comprises a body part 610 and a stirring blade 611 extending from the body part 610. A second magnet 62 adapted to the first magnet 520 is provided inside the body part 610. Thanks to the second rotary shaft 60, it is not necessary to provide an assembling hole on the pot body 21, so that the cooker can perform functions other than stirring, such as frying, stir frying, steaming, and boiling. In addition, the second magnet 62 adapted to the first magnet 520 simplifies the structure of the stirring assembly 6 and ensures the stirring efficiency.

What has been described above are only preferred embodiments of the present invention and are not intended to limit the present invention. Any modification, equivalent replacement, improvement, etc. made within the spirit and principle of the present invention shall fall within the scope of protection of the present invention.

## Claims

1. A multifunctional cooker, **characterized in that**, it comprises a base (1) and a pot (2) assembled to the base (1), a driving assembly (3) being provided in the base (1), the pot (2) comprising a bottom (20) and a pot body (21) assembled to the bottom (20), a power assembly (4) adapted to the driving assembly (3) being provided in the bottom (20), a stirring assembly (6) being detachably provided in the pot body (21) and able to rotate under the drive of the power assembly (4).

2. A multifunctional cooker, **characterized in that**, the driving assembly (3) comprises a motor (30) and a first reduction gear set (31) rotatably connected with the motor (30).

3. The multifunctional cooker of claim 2, **characterized in that**, the first reduction gear set (31) comprises a first gear (310) assembled to a tail end of a motor shaft of the motor (30) and a second gear (311) drivingly connected with the first gear (310) by means of a transmission belt.

4. The multifunctional cooker of claim 3, **characterized in that**, the base (1) comprises a base body (10) and a bottom plate (11) assembled to the base body (10), a first accommodating chamber (12) that accommodates the second gear (311) and a second accommodating chamber (13) that accommodates the bottom (20) being formed on the base body (10), an output shaft (3110) of the second gear being provided with a first coupler (32) that extends into the second accommodating chamber (13), the power assembly (4) being provided with a second coupler (33) adapted to the first coupler (32).

5. The multifunctional cooker of claim 4, **characterized in that**, a plurality of receiving grooves (130) are provided on a side wall of the second accommodating chamber (13), the bottom (20) being provided with protruding ribs (203) at locations corresponding to the receiving grooves (130), the protruding ribs (203) being placed in the receiving grooves (130) when the pot (2) is assembled to the base (1) so as to limit the circumferential rotation of the pot (2).

6. The multifunctional cooker of any one of claims 1 to 5, **characterized in that**, the power assembly (4) comprises a transmission shaft assembly (40) and a magnetic driving assembly (5) rotatably connected with the transmission shaft assembly (40), the transmission shaft assembly (40) comprising a transmission shaft (401) and a third gear (403) provided on the transmission shaft (401) and connected with the magnetic driving assembly (5),

7. The multifunctional cooker of claim 6, **characterized in that** the magnetic driving assembly (5) comprises a first support (50) and a fourth gear (51) provided on the first support (50), the fourth gear (51) being provided below the first support (50) and engaged with the third gear (403).

8. The multifunctional cooker of claim 7, **characterized in that**, the magnetic driving assembly (5) comprises a magnetic assembly (52) provided above the first support (50) and comprising a first magnet (520), the stirring assembly (6) comprising a second magnet (62) adapted to the first magnet (520) so that the stirring assembly (6) is driven to rotate by the magnetic driving assembly (5).

9. The multifunctional cooker of claim 8, **characterized in that**, the magnetic assembly (52) comprises an assembling box (521) for assembling the first magnet (520), the first support (50) being provided with a first rotary shaft (501) that passes through the assembling box (521) and assembles and fixes the magnetic assembly (52) to the first support (50) by means of a nut (53).

10. The multifunctional cooker of claim 8 or 9, **characterized in that**, the stirring assembly (6) comprises a second rotary shaft (60) and a rotating member (61) detachably assembled to the second rotary shaft (60), the rotating member (61) comprising a body part (610) and a stirring blade (611) extending from the body part (610), the second magnet (62) being provided inside the body part (610).

11. The multifunctional cooker of any one of claims 7 to 10, **characterized in that**, the bottom (20) is provided with a third accommodating chamber (201), the center of which is provided with a receiving part (202), the transmission shaft (401) being at least partially received inside the receiving part (202) and coaxially arranged with the shaft of the second gear (311).

12. The multifunction cooker of any one of claims 1 to 11, **characterized in that**, the pot body (21) comprises a side wall (210) and a bottom wall (211), the bottom wall (211) being provided with a heating assembly (212) and a temperature control assembly (213), a heat isolating plate (214) being provided between the pot body (21) and the bottom (20).
